# EUROPEAN PATENT APPLICATION

(11) **EP 3 835 034 A1**
(43) Date of publication of application: **16.06.2021**
(21) Application number: 19216180.0
(22) Date of filing: 13.12.2019
(51) Int. Cl.: B29C 65/02, B29C 65/10, B29C 65/14, B29C 65/34, B29C 65/36, F16B 7/00, F16L 47/03, F16L 47/32, F16L 47/02, B29L 31/24

(54) **WELDED FIBER-REINFORCED FITTINGS AND METHODS OF MAKING THE SAME**

(71) Applicant: SHPP Global Technologies B.V., 4612 PX Bergen op Zoom (NL)
(72) Inventor: SOLENICKI, Goran, 4612 PX Bergen op Zoom (NL)
(74) Representative: J A Kemp LLP

(57) **Abstract**

A method of making a fitting can comprise positioning first and positioning first and second fitting bodies, each defining one or more channels that each has an open cross-sectional perimeter, relative to one another such that the channel(s) of the first fitting body and the channel(s) of the second fitting body cooperate to define one or more passages that each has a closed cross-sectional perimeter. The first and second heating bodies can be heated to bond the fitting bodies together. Each of the fitting bodies can comprise one or more composites, each including a plurality of fibers dispersed within a polymeric matrix material.

## Description

### TECHNICAL FIELD

The present invention relates generally to fiber-reinforced composites, and more specifically, to multi-piece fiber-reinforced fittings that may be suitable for connecting multiple structures together.

### BACKGROUND

Fittings, or couplings, are used to connect two or more structures together to form a larger structure. In some scenarios, a fitting may be used to connect hollow structures; for example, they can be used in pipe systems to connect piping or plumbing to define a desired pathway for liquid or gas. In other scenarios, fittings may be used to connect solid structures, such as in scaffolding to connect struts to construct a platform that can support a load. Typically, fittings are made of metals (e.g., iron or copper), metal alloys (e.g., steel), and plastics (e.g., ABS, PVC, or HDPE). Recently, fiber-reinforced composites have been used to manufacture fittings that are relatively strong and lightweight. However, the use of fiber-reinforced composites can present a variety of challenges and problems.

Generally, fittings must be hollow to receive and thereby join structures together. While uniform hollow fiber-reinforced fittings may have high strength and be suitable for many load-bearing applications, it may be difficult to attach the fiber-reinforced fittings to the structures to be joined without additional connections (e.g., threads or external fasteners). Adding threads to a fiber-reinforced fitting may impact fiber orientation and decrease overall strength, while external connectors may increase manufacturing costs or assembly time. In addition, uniform hollow fiber-reinforced composites may be more difficult to manufacture than solid components. Typically, hollow fiber-reinforced composite parts are manufactured from bladder-assisted resin transfer molding (BARTM). Manufacturing composites using BARTM may require long filling times and yield deformed parts, among other complications. It can be difficult to optimize process parameters to avoid these issues.

A hollow fiber-reinforced fitting may be also manufactured by making and joining two or more fiber-reinforced sub-components to form the fitting, which can avoid some of the manufacturing issues associated with BARTM. However, combining multiple sub-components to form a single fitting often requires the use of additional material such as an adhesive. Generally such a coupling creates a weakness in the final joint that does not exist in uniform, fiber-reinforced fittings. As a result, the overall strength of the multi-component fitting may be limited by that of the coupling material (e.g., the adhesive), whose strength is lower than that of the fiber-reinforced sub-components. In addition, the sub-components may not allow the connection between the fitting and the structures that the fitting connects to be flush, which may create issues when mounting multiple structures to the fitting.

As such, fiber-reinforced fittings that have high strength may have high manufacturing costs and long production times, and those that have lower manufacturing costs and faster production times may not have adequate strength for many applications. Thus, there is a need for high-strength, fiber-reinforced fittings that can be cost-effectively and rapidly manufactured.

### SUMMARY

Some of the present composites can address these needs with two or more fiber-reinforced pieces that are coupleable to define a high-strength composite fitting configured to connect two or more structures together. Such a composite can be made relatively fast without substantially sacrificing strength at least by positioning first and second fitting bodies, each defining one or more channels that each has an open cross-sectional perimeter, relative to one another such that the channel(s) of the first fitting body and the channel(s) of the second fitting body cooperate to define one or more passages that each has a closed cross-sectional perimeter. Each of the fitting bodies may comprise a plurality of fibers dispersed within a polymeric matrix material (e.g., a thermoplastic material)-such as one or more laminates that comprise fibers dispersed in the matrix material-to facilitate bonding between the fitting bodies and promote the fitting's strength. Once so positioned, the first and second fitting bodies can be heated (e.g., such that the temperature of the fitting bodies is above a temperature at which the composite(s) thereof can fuse together) such that the matrix materials fuse and the fitting bodies are bonded together. In this manner, it is possible to avoid the issues associated with manufacturing hollow members using BARTM, while still producing high-strength fittings. This assembly may be performed using automatized manufacturing, increasing productivity.

Some methods may include, before heating the first and second fitting bodies, positioning two or more beams relative to the fitting bodies such that the beams are disposed within the passage(s) (e.g., by placing the fitting bodies around the beams). Heating the first and second fitting bodies can be performed while the beams are disposed within the passage(s) to bond the beams to the fitting bodies at the same time as the fitting bodies are bonded togethe.

The fitting bodies can be heated in any suitable manner, such as passing an electric current through the fitting bodies. In such embodiments, the fibers and/or particles that are in the matrix material can be conductive to permit the flow of electric current. For example, the laminate(s) (if present) of each of the fitting bodies can be configured to conduct electricity (e.g., by including carbon fibers) and generate heat when an electric current passes through the laminate.

The fitting bodies-and thus fitting-can have any suitable shape. For example, the fitting can be L-shaped, with the passage(s) including a first passage having a longitudinal axis aligned with a first direction and a second passage having a longitudinal axis aligned with a second direction that is orthogonal to the first direction.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" may be substituted with "within [a percentage] of' what is specified, where the percentage includes 0.1, 1, 5, and 10 percent.

The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above, and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Views in the figures are drawn to scale, unless otherwise noted, meaning the sizes of the depicted elements are accurate relative to each other for at least the embodiment in the view.
**FIG. 1A** is a perspective view of an embodiment of the present connector assemblies that includes a fitting that connects two beams.
**FIG. 1B** is a cross-sectional view of the connector assembly of FIG. 1A taken along a plane that bisects the connector assembly and is positioned between the fitting's first and second fitting bodies; FIG. 1B illustrates the positioning of beams within the fitting.
**FIG. 2A** is a perspective view of the first and second fitting bodies of the fitting of FIG. 1A before being coupled to define the fitting.
**FIGs. 2B-2D** are front perspective, back perspective, and side views of the first fitting body of the FIG. 1A fitting.
**FIGs. 2E-2G** are front perspective, back perspective, and side views of the second fitting body of the FIG. 1A fitting.
**FIG. 2H** is a perspective view of the fitting of FIG. 1A when the first and second fitting bodies are bonded together.
**FIG. 3** is a perspective view of the first and second fitting bodies of another embodiment of the present fittings before being coupled to define the fitting, each of the fitting bodies defining a lip at each of the ends thereof.
**FIGs. 4A-4C** are perspective views of other embodiments of the present fittings having different passage configurations.
**FIG. 5A** is a cross-sectional view of the first fitting body of the fitting of FIG. 1A taken along line 5A-5A of FIG. 2A and illustrates the laminate construction thereof.
**FIGs. 5B** and **5C** are cross-sectional views of a first fitting body including two laminates and a polymeric material (FIG. 5B) and a first fitting body including polymeric material alone (FIG. 5C).
**FIGs. 6A-6C** illustrate some of the present methods of forming a connector assembly in which fitting bodies and beams are bonded together using heat.

### DETAILED DESCRIPTION

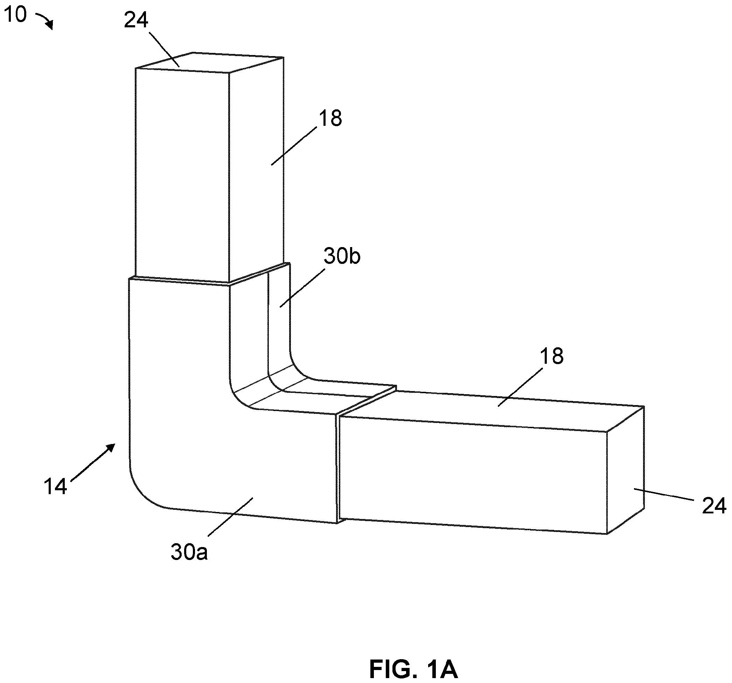

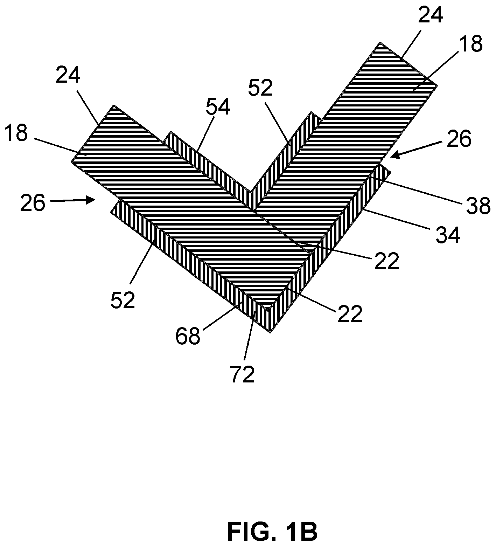

Referring to FIGs. 1A and 1B, shown is a first embodiment 10 of the present connector assemblies that includes a fitting 14 configured to connect two or more structures (e.g., 18) together. As shown, fitting 14 is configured to connect two or more beams 18; however, in other embodiments the fitting can be configured to connect any suitable structures. Fitting 14 may define one or more passages 26, each configured to receive at least one beam 18 such that the beams are coupled to the fitting. Each of beams 18 may comprise a first end 22 that is disposed in one of passage(s) 26 and a second end 24 that is disposed outside of the passage. To illustrate, first end 22 of a first beam (e.g., 18) may be positioned within a first passage (e.g., 26) of fitting 14 and first end 22 of a second beam (e.g., 18) may be positioned within a second passage (e.g., 26) of the fitting to couple the first beam to the second beam. At least one of beams 18 can, but need not, be in contact with at least one other of the beams while the beams are positioned within fitting 14. Each of passage(s) 26 can be shaped and sized to facilitate coupling with a structure (e.g., 18); as shown, the cross-section of each of the passage(s) is rectangular (e.g., to receive a beam with a rectangular cross-section), but in other embodiments can have any suitable shape to receive a corresponding structure, such as polygonal (e.g., square, rectangular, hexagonal, octagonal, and/or the like), elliptical, a combination thereof (e.g., rounded rectangle), and/or the like.

Fitting 14 may comprise two or more fitting bodies (e.g., 30a and 30b) coupleable to define the fitting. In the embodiment shown in FIGs. 1A and 1B, fitting 14 comprises a first fitting body 30a and a second fitting body 30b. However, in other embodiments, fitting 14 may comprise more than two fitting bodies. First and second fitting bodies 30a and 30b can be bonded (e.g., fused after being heated) to define fitting 14 (e.g., having a unitary body) without the use of an adhesive or other external fastener. By using relatively few parts, fitting 14 can be produced at relatively low cost and relatively fast.

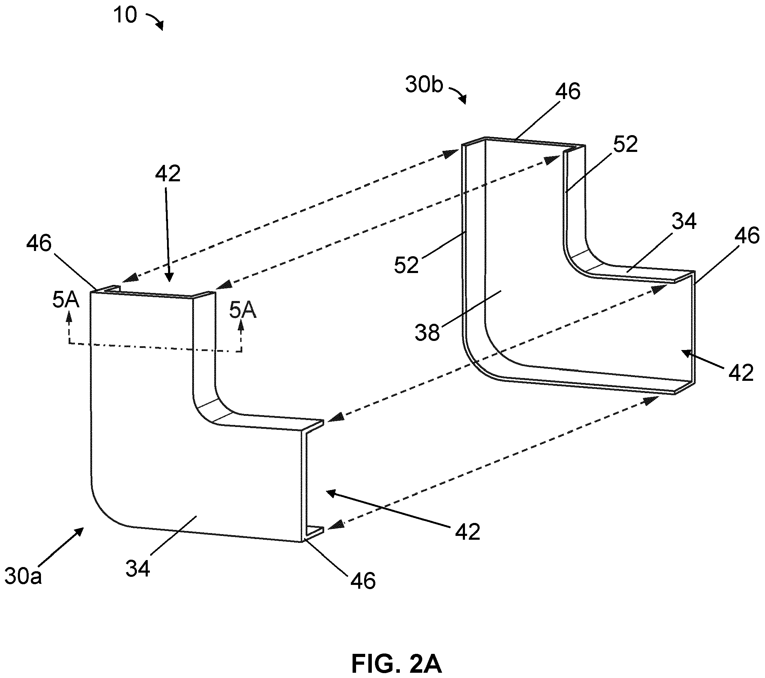

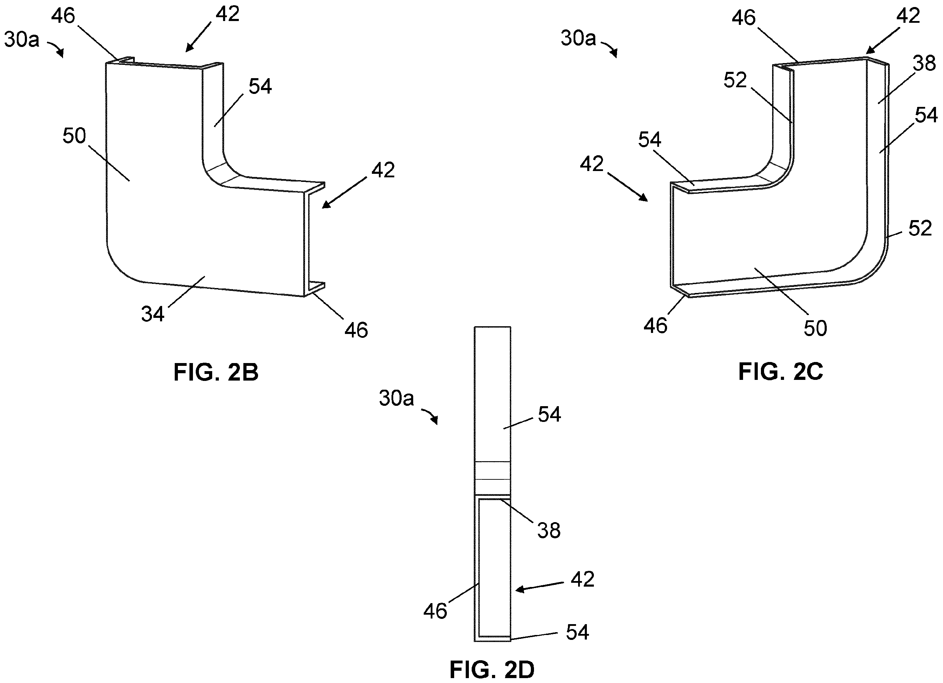

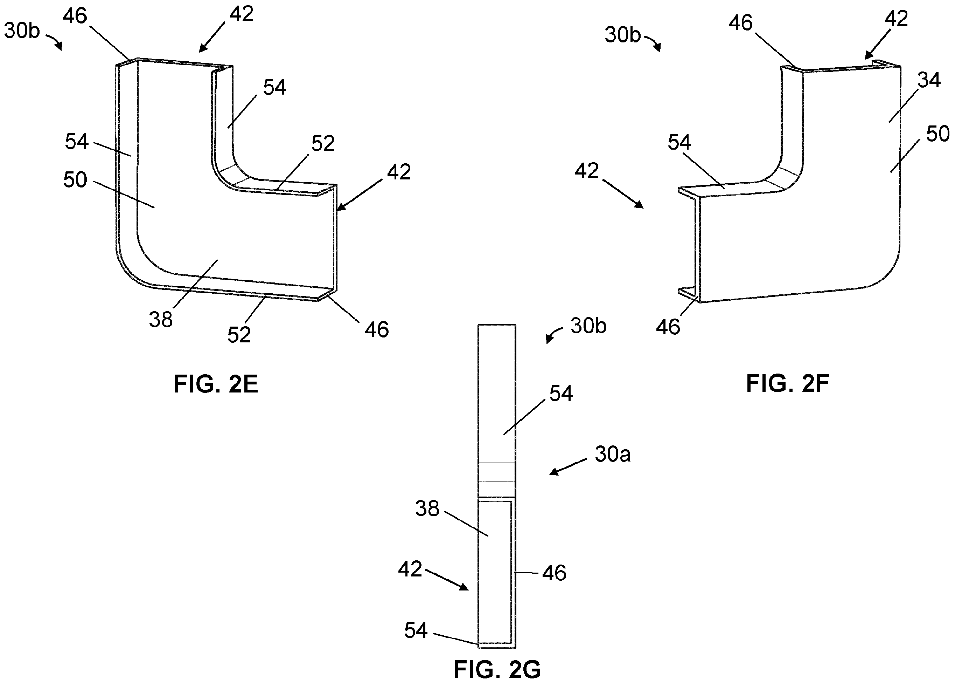

FIG. 2A shows first and second fitting bodies 30a and 30b before being bonded to define fitting 14. Each of fitting bodies 30a and 30b may be manufactured separately and thereafter coupled together; in this manner, fitting 14 can be easily made even if it has a complex geometry. Referring additionally to FIGs. 2B-2G-which show first fitting body 30a (FIGs. 2B-2D) and second fitting body 30b (FIGs. 2E-2G)-each of the fitting bodies may comprise an outer surface 34 and an opposing inner surface 38 such that, when the fitting bodies are coupled together, the inner and outer surfaces thereof define fitting 14's inner and outer surfaces, respectively. For each of fitting bodies 30a and 30b, inner surface 38 can define one or more channels 42, each extending from an open end 46 (e.g., opening) of the fitting body and, optionally, through the fitting body such that when the fitting bodies are coupled together the channel(s) cooperate to define the fitting's passage(s) 26.

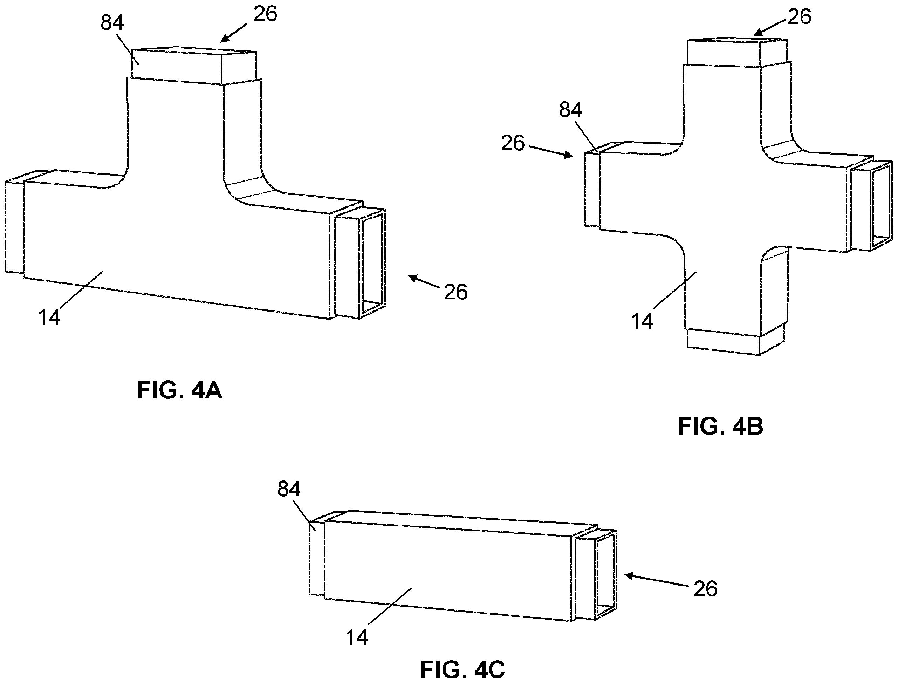

Fitting bodies 30a and 30b can define any suitable number of channels 42 arranged in any suitable manner such that the geometry of fitting 14 permits structures (e.g., 18) to be coupled together and thereby positioned appropriately for the fitting's intended application. As shown, each of fitting bodies 30a and 30b defines at least two channels 42: a first channel having a longitudinal axis that is aligned in a first direction and a second channel having a longitudinal axis that is aligned in a second direction that is angularly disposed relative to the first direction. The first direction and second directions, as shown, are orthogonal (e.g., angularly disposed by 90 degrees relative to one another) such that each of fitting bodies 30a and 30b is L-shaped; however, in other embodiments first direction and second direction may be angularly disposed by an angle that is greater than or equal to any one of, or between any two of 10, 20, 30, 40, 50, 60, 70, 80, 90, 100, 125 or 150 degrees (°) (e.g., between 45° and 90°). As used herein, "aligned" means within 10 degrees of parallel. The depicted channels 42 may each be characterized as a "closed channel" (e.g., with the longitudinal axis thereof extending from open end 46 to a portion of inner surface 38). In other embodiments, each of fitting bodies 30a and 30b may comprise any suitable shape and/or at least one of channel(s) 42 can be an "open channel" (e.g., such that the longitudinal axis thereof extends between opposing open ends 46 without intersecting inner surface 38), as described in further detail below with reference to FIGs. 4A-4C. When a fitting body (e.g., 30a and/or 30b) defines multiple channels 42, those channels (e.g., the first and second channels) can be in fluid communication with each other.

The geometry of each of fitting bodies 30a and 30b can be such that each of channel(s) 42 thereof has an open cross-sectional perimeter (e.g., such that the channel is unbounded), which facilitates manufacturing as described in further detail below. For example, each of fitting bodies 30a and 30b can comprise a base 50 and one or more sidewalls 54 extending from the base. As shown, two sidewalls 54 extend from opposing sides of base 50, optionally in a direction that is substantially orthogonal to the base such that a cross-sectional perimeter of the channel, taken along a plane orthogonal to a longitudinal axis of the channel, is substantially U-shaped. Base 50 and sidewall(s) 54 can intersect to define an edge between the base and each of the sidewall(s), with the portion of inner surface 38 that is defined by the sidewall angularly disposed relative to the portion of the inner surface that is defined by the base by an angle that is substantially 90° (e.g., such that fitting 14 is configured to receive a square or rectangular beam 18); in other embodiments, however, the base and each of the sidewall(s) can intersect to define a curved (e.g., fillet) surface extending therebetween As shown, each of sidewall(s) 54 may extend between two open ends 46 of each of fitting bodies 30a and 30b and/or each of channel(s) 42 may have a constant cross-sectional perimeter (e.g., moving along the longitudinal axis thereof from open end 46).

Each of fitting bodies 30a and 30b may comprise one or more mating surfaces 52, each defined by a surface of a respective one of sidewall(s) 54 that is furthest away from base 50. Mating surface(s) 52 and open end(s) 46 can form a boundary that surrounds inner surface 38 and, optionally, is disposed between the inner surface and outer surface 34. Accordingly, inner surface 38 may be defined as the surface of a fitting body that is between mating surface(s) 52 and open end(s) 46. In some embodiments, each of mating surface(s) 52 lies in a plane that is orthogonal to each of open end(s) 46.

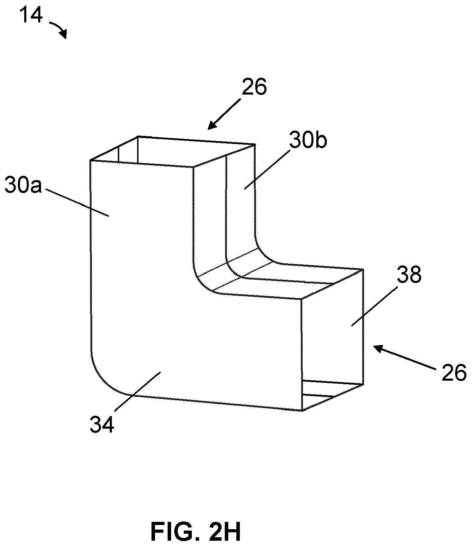

As shown in FIG. 2H, fitting bodies 30a and 30b can be coupled such that each of the fitting bodies' mating surface(s) 52 abuts at least one of the mating surface(s) of at least one other of the fitting bodies to define fitting 14. Each of mating surfaces 52 of first fitting body 30a may be aligned with a respective one of the mating surfaces of second fitting body 30b, with abutting mating surfaces having similar shapes (e.g., as determined by the shape of sidewall 54 that defines the mating surface) to cooperate and define a flush connection between the fitting bodies. In this way, first and second fitting bodies 30a and 30b are positionable relative to each other such that channels 42 thereof-each of which includes an open cross-sectional perimeter-cooperate to define passage(s) 26 of fitting 14 that each includes a closed cross-sectional perimeter (e.g., such that the passage is bounded) to receive a structure (e.g., 18) and/or convey fluids. To illustrate, first and second fitting bodies 30a and 30b can be coupled such that first channels (e.g., 42) of the fitting bodies cooperate to define a first passage (e.g., 26) and second channels (e.g., 42) of the fitting bodies cooperate to define a second passage (e.g., 26). First fitting body 30a and second fitting body 30b can be symmetrical and coupled such that a plane bisecting passage(s) 26 of fitting 14 is disposed between the fitting bodies, with each of the fitting bodies defining half of the volume of the fitting's passage(s). In other embodiments, however, first fitting body 30a may define a majority of the volume of passage(s) 26 and second fitting body 30b may define a minority of the volume of the passage(s). In this manner, fitting bodies 30a and 30b can be easily positioned and joined to form a high-strength unitary fitting 14; this can performed with automatized manufacturing to yield high productivity. In addition, fitting bodies 30a and 30b can be manufactured to have an appropriate welding area defined by mating surfaces 52 based on the loads fitting 14 is expected to encounter.

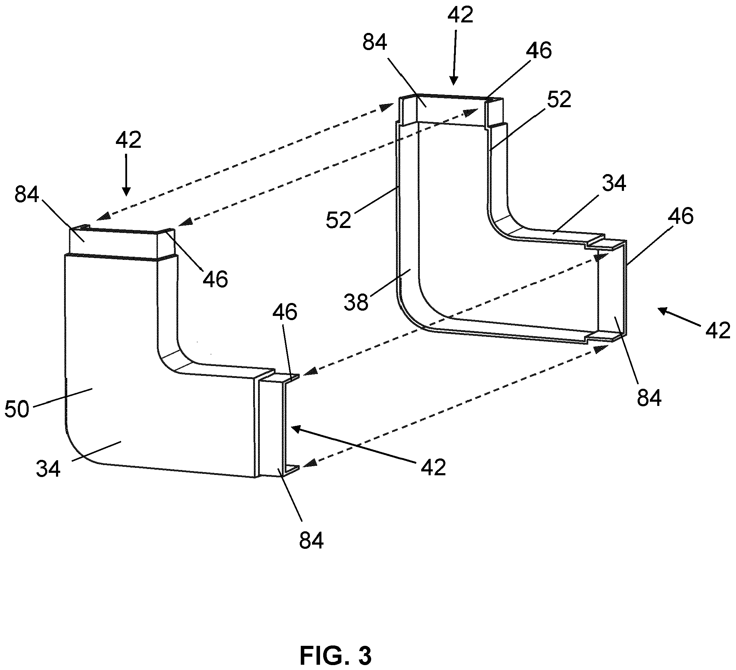

While as described above fitting bodies 30a and 30b-and thus fitting 14-can be configured such that the fitting's passage(s) 26 are configured to receive structures (e.g., beams 18), in other embodiments, the fitting bodies-and thus fitting-can be configured to couple the structures (e.g., beams) when the structures (e.g., beams) are disposed outside of the passage(s) e.g., when the beams are in contact with outer surfaces 34 of the fitting bodies. Referring to FIG. 3, for example, shown is a second embodiment of a fitting 14 with first and second fitting bodies 30a and 30b that are substantially the same as those described above with respect to FIGs. 2A-2H, the primary exception being that each of the fitting bodies defines a lip 84 at at least one of open end(s) 46 such that a cross-sectional area of a portion of channel 42 at the end is smaller than a cross-sectional area of another portion of the channel (e.g., such that the channel has a varying cross-sectional area, with a minimum cross-sectional area at the end). When fitting bodies 30a and 30b are coupled together, each of lip(s) 84 of first fitting body 30a can cooperate with a respective one of the lip(s) of second fitting body 30b such that the lips can be received in a channel of a hollow structure (e.g., a pipe or tube) to couple the structure to the fitting. In this way, fitting 14 can place hollow structures coupled thereto in fluid communication (e.g., with passage(s) 26 allowing fluid to flow therebetween). In some embodiments, lip 84 may be tapered, beveled, or chamfered, and/or can include threads to facilitate coupling with a structure.

Fitting bodies 30a and 30b-and thus fitting 14-can have other shapes other than that depicted in FIGs. 2A-2H, as illustrated in FIGs. 4A-4C. For example, without limitation, each of fitting bodies 30a and 30b can have an open channel and a closed channel with orthogonal longitudinal axes (FIG. 4A) (e.g., to connect three structures), two open channels with orthogonal longitudinal axes (FIG. 4B) (e.g., to connect four structures), or a single open channel (FIG. 4C) (e.g., to connect two structures). While the fittings shown in FIGs. 4A-4C are lipped as described with respect to FIG. 3, they need not be.

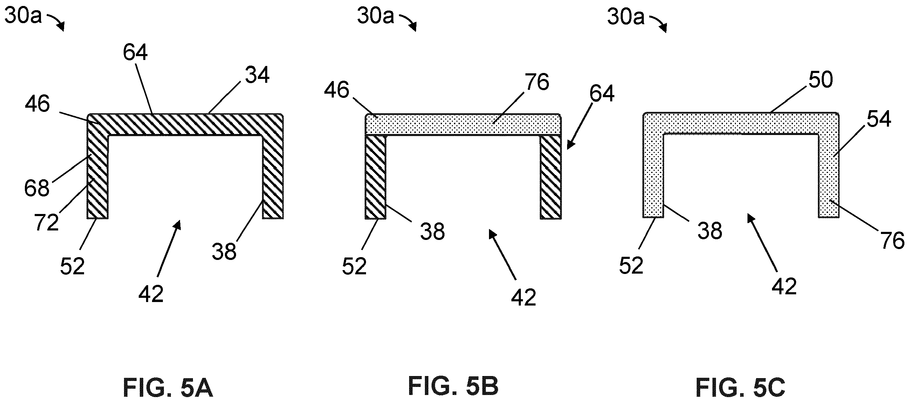

Referring to FIGs. 5A-5C-which are cross-sectional views of some of the present fitting bodies (e.g., 30a and/or 30b)-each of the fitting bodies can comprise one or more fiber-reinforced composites, each having fibers 68 dispersed within a polymeric matrix material 72, which can facilitate strong bonding between fitting bodies to promote fitting 14's strength. For example, each of the fitting bodies can comprise one or more laminates 64 alone (FIG. 5A), laminate(s) and a polymeric material (FIG. 5B), or a polymeric material alone (FIG. 5C). Through such a composite construction, fitting bodies 30a and 30b can be configured to be bonded together when heated.

Each of laminate(s) 64 may comprise one or more, optionally two or more, laminae that can each include fibers 68 dispersed within a matrix material 72. Fibers (e.g., 68) of the present laminates (e.g., 64) can include any suitable fibers, such as, for example, carbon fibers, glass fibers, aramid fibers, polyethylene fibers, polyester fibers, polyamide fibers, ceramic fibers, basalt fibers, steel fibers, and/or the like. For at least one of the laminae, fibers 68 can be continuous fibers, e.g., where the lamina is a unidirectional lamina (e.g., a 0-degree, 90-degree, or off-axis unidirectional lamina, where substantially all of the lamina's fibers are aligned in a single direction) and/or a woven lamina (e.g., with fibers arranged in a plane, twill, satin, basket, leno, mock leno, or the like weave). To illustrate, laminate 64 may include one or more first unidirectional laminae comprising fibers aligned in a first direction and one or more second unidirectional laminae comprising fibers aligned in a second direction that is angularly disposed relative to the first direction. In some embodiments, at least one of the laminae can be a nonwoven lamina (e.g., with discontinuous fibers) and/or at least one of the laminae may not include fibers (e.g., can comprise a sheet of matrix material).

Matrix materials (e.g., 72) of the present laminates (e.g., 64) can include any suitable thermoplastic material, such as, but not limited to, polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), poly ether ketone ketone (PEKK), acrylonitrile butyldiene styrene (ABS), polyphenylene sulfide (PPS), a copolymer thereof, or a blend thereof.

Polymeric material 76 may comprise a matrix material such as a thermoplastic material (e.g., any of those described above) and, in some configurations, can include a plurality of fibers (e.g., 68) (e.g., discontinuous or chopped fibers) dispersed within the matrix material. To illustrate, such fibers can account for 10 to 70% of polymeric material 76 by weight. When a fitting body includes both laminate(s) 64 and polymeric material 76, the polymeric material can include the same matrix material as the laminate(s), which can facilitate bonding therebetween.

In some embodiments, polymeric material 76 is coupled to laminate(s) 64 to define a fitting body. For example, a fitting body (e.g., 30a or 30b) can be formed by molding (e.g., overmolding, injection molding, insert molding, and/or the like) polymeric material 76 onto laminate(s) 64; as shown in FIG. 5B, the polymeric material is molded with the laminates such that the polymeric material defines base 50 and each of sidewalls 54 is defined by a respective one of the laminates.

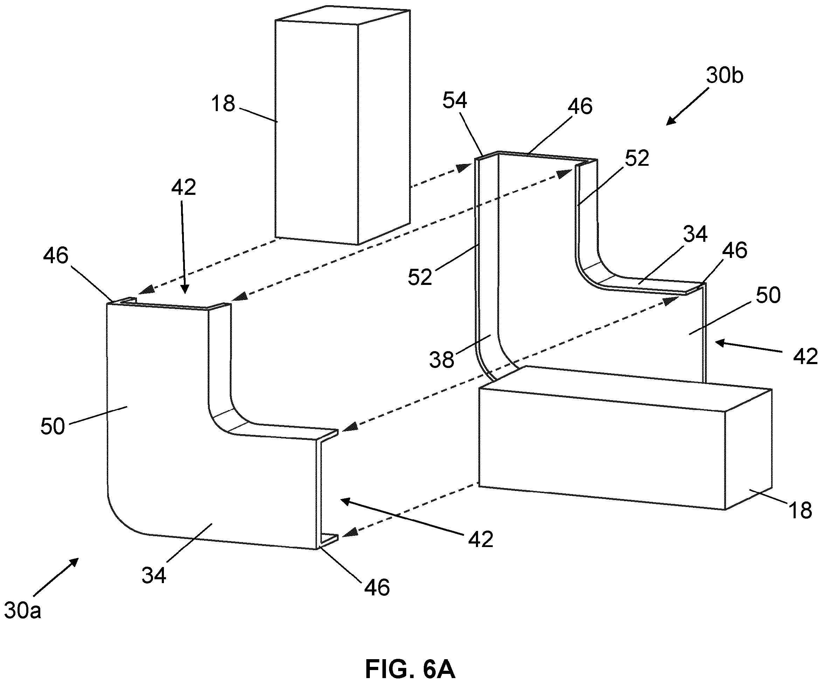

By including one or more of the above-described composites, fitting bodies 30a and 30b can be bonded to one another when heated. To illustrate, and referring additionally to FIGs. 6A-6C, some of the present methods of making a fitting (e.g., 14) include positioning first and second fitting bodies (e.g., 30a and 30b) (e.g., any of those described above) relative to one another such that the channel(s) (e.g., 42) of the first fitting body and the channel(s) (e.g., 42) of the second fitting body cooperate to define one or more passages (e.g., 26) of the fitting that each has a closed cross-sectional perimeter. The first and second fitting bodies can thereafter be heated to bond the fitting bodies together, e.g., such that their temperature is raised to a temperature at which the composite(s) can fuse (e.g., to a temperature that is greater than or equal to the glass transition temperature of the matrix material). For example, one or more portions of first fitting body 30a (e.g., mating surfaces 52) defined by at least one of its composite(s)-whether a laminate (e.g., 64) or polymeric material (e.g., 76)-can be positioned to contact one or more portions of second fitting body 30b (e.g., mating surface 52) defined by at least one of its composite(s) (e.g., laminate or polymeric material) such that, upon heating, the composites contacting one another fuse to bond the fitting bodies together. In this manner, coupling can be achieved without any external fastener, adhesive, or the like. Further, such coupling can facilitate easy manufacturing of a connector assembly (e.g., 10) and/or the fitting because the fitting bodies do not bond in ambient conditions (e.g., at room temperature) such that they may be easily handled or positioned relative to the other bodies and/or structures (e.g., beam 18) without unwanted coupling.

Heat can be applied in any suitable manner to bond the fitting bodies, such as through thermal conduction, thermal convection, thermal radiation (e.g., infrared, microwave, etc.), and/or the like. For example, the laminate(s) and/or polymeric material can comprise a conductive material (e.g., the fibers of the laminate(s) can include carbon fibers and/or the polymeric material can include conductive polymer fillers) such that an electric current can be pass therethrough, e.g., as via induction. The laminate(s) and/or polymeric material can generate heat when electric current flows therethrough due to the electric resistance thereof; in this manner, the fitting bodies can be heated using the electric current. In some embodiments, an external tool (e.g., heat gun, hair dryer, blow torch, infrared heater, or other suitable heat-generating device) may be used to heat the laminate(s) and/or polymeric material to couple the fitting bodies together. For example, the fitting bodies can be heated using microwaves; such heating can be particularly effective when the fibers of the composite(s) include carbon fibers, which can effectively absorb microwaves for efficient heat transfer.

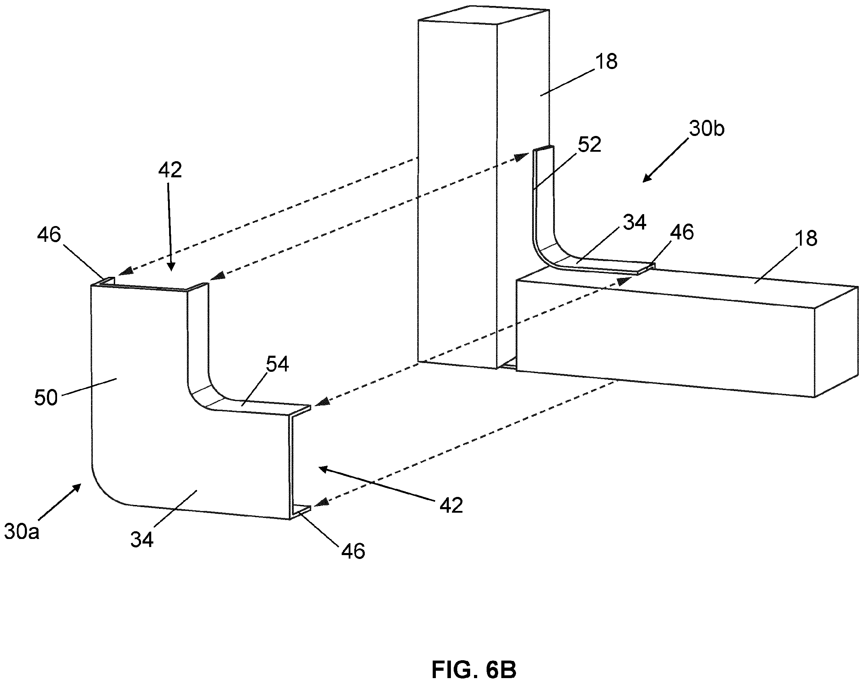

The fitting can be formed such that the structures it connects (e.g., beams 18) are bonded to the fitting bodies when the fitting bodies are heated and coupled. Before heating the first and second fitting bodies, two or more structures (e.g., two or more beams 18) can be positioned relative to the fitting bodies such that each of the structures is coupled to the fitting bodies, such as by being disposed in one of the passage(s) defined by the fitting bodies' channels. For example, as shown each of the beams can be positioned within one of the channel(s) of the first fitting body (e.g., to contact the inner surface thereof, with a second end of the beam extending outside of the channel) (FIG. 6B) and the second fitting body can thereafter be positioned relative to the first fitting body to define the passage(s) as described above (FIGs. 1A and 1B). In other embodiments, however, the beams can be disposed in the passage(s) after the fitting bodies are positioned to define the passage(s).

The fitting bodies can be bonded to the structures (e.g., beams) in the same manner as the fitting bodies are fused to each other, e.g., each of the beams can also include a polymeric matrix material that, optionally, is fiber-reinforced (e.g., comprising one or more laminates and/or a polymeric material) such that, when the beams are disposed in the passage(s) and the fitting bodies are heated, the fitting bodies and beams bond together. For example, each of the beams may comprise a sandwich laminate (e.g., comprising a core positioned between two or more composite skins). In this way, the connection assembly can be strong and lightweight, yet manufactured in a way that avoids the issues of conventional manufacturing techniques used to make hollow fittings

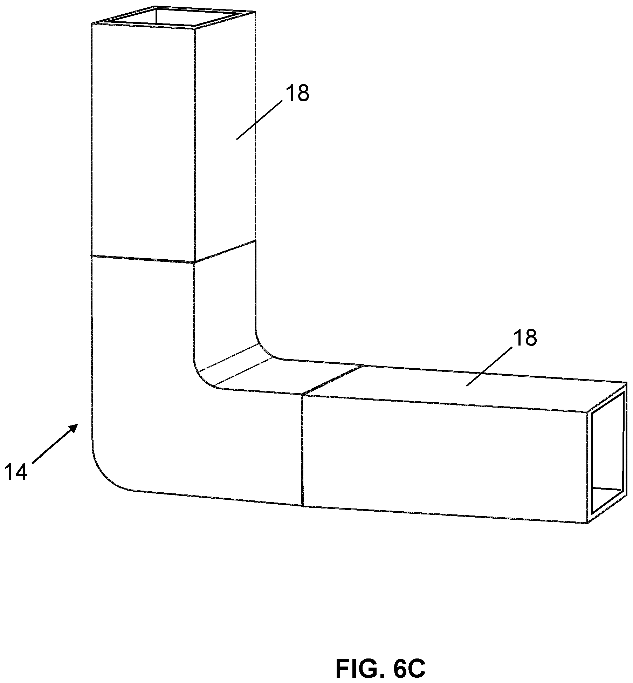

In some methods, each of the fitting bodies is shaped such that the fitting's outer surface is substantially flush with the outer surfaces of the structures (e.g., beams) that it connects. For example, the fitting can be lipped as described in reference to FIG. 3 and the structures (e.g., beams) can each define a channel. Positioning the structures can be performed such that, for each, the channel receives a lip of the first fitting body and a lip of the second fitting body. As shown in FIG. 6C, after the fitting bodies are heated, the outer surfaces of the beams and fitting are substantially flush, e.g., for each of the beams, a maximum transverse dimension of the beam, measured perpendicularly to a centerline of the channel of the beam, is substantially equal to a maximum transverse dimension of the fitting, measured parallel to the transverse dimensions of the beam. In this way problems associated with installation of the connector assembly when structures abut it (e.g., when mounting sandwich panels or windows against it) can be mitigated.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A method of making a fitting, the method comprising:
positioning first and second fitting bodies, each defining one or more channels that each has an open cross-sectional perimeter, relative to one another such that the channel(s) of the first fitting body and the channel(s) of the second fitting body cooperate to define one or more passages that each has a closed cross-sectional perimeter; and
heating the first and second fitting bodies to bond the fitting bodies together;
wherein each of the fitting bodies comprises one or more composites that each includes a plurality of fibers dispersed within a polymeric matrix material.

2. The method of claim 1, comprising:
before heating the first and second fitting bodies, positioning two or more beams relative to the fitting bodies such that each of the beams is disposed within one of the passage(s), each of the beams including a polymeric matrix material;
wherein heating the first and second fitting bodies is performed while the beams are disposed within the passage(s) to bond the beams to the fitting bodies.

3. The method of claim 1, comprising:
before heating the first and second fitting bodies, positioning two or more beams, each defining a channel, relative to the fitting bodies such that, for each of the beams, the channel receives a lip of the first fitting body and a lip of the second fitting body;
wherein:
heating the first and second fitting bodies is performed while the lips are disposed in the channels of the beams to bond the beams to the fitting bodies; and
for each of the beams, a maximum transverse dimension of the beam, measured perpendicularly to a centerline of the channel of the beam, is substantially equal to a maximum transverse dimension of the fitting, measured parallel to the transverse dimension of the beam.

4. The method of any of claims 1-3, wherein heating the first and second fitting bodies comprises passing an electric current through the fitting bodies and/or heating the fitting bodies using microwaves.

5. The method of any of claims 1-4, wherein for at least one of the first and second fitting bodies, at least one of the composite(s) is a laminate comprising two or more laminae.

6. The method of any of claims 1-5, comprising forming each of the first and second fitting bodies at least by injection molding.

7. The method of any of claims 1-6, wherein each of the passage(s) is configured to receive one or more beams.

8. The method of any of claims 1-7, wherein for each of the first and second fitting bodies, the matrix material of each of the composite(s) comprises a thermoplastic material.

9. The method of any of claims 1-8, wherein for each of the first and second fitting bodies, the one or more channels include:
a first channel having a longitudinal axis aligned in a first direction; and
a second channel having a longitudinal axis aligned in a second direction that is orthogonal to the first direction.

10. A fitting comprising:
first and second fitting bodies, each:
defining or more channels that each has an open cross-sectional perimeter; and
comprising one or more laminates, each including a plurality of fibers dispersed within a polymeric matrix material;
wherein the first and second fitting bodies are configured to be bonded together when the fitting bodies are positioned such that the channel(s) of the first fitting body and the channel(s) of the second fitting body cooperate to define one or more passages that each has a closed cross-sectional perimeter and the fitting bodies are heated.

11. The fitting of claim 10, wherein:
the passage(s) are configured to receive two or more beams, each comprising a polymeric matrix material; and
the fitting bodies are configured to be bonded to the beams while the beams are positioned within the passage(s) and the fitting bodies are heated.

12. The fitting of claim 10 or 11, wherein for each of the first and second fitting bodies, the one or more passages comprise:
a first passage having a longitudinal axis aligned in a first direction; and
a second passage having a longitudinal axis aligned in a second direction that is orthogonal to the first direction.

13. The fitting of any of claims 10-12, wherein for each of the first and second fitting bodies, the fibers of each of the laminate(s) comprise continuous carbon fibers.

14. The fitting of any of claims 10-13, wherein for each of the first and second fitting bodies, the matrix material of each of the laminate(s) comprises a thermoplastic material.

15. The fitting of any of claims 10-14, wherein for each of the first and second fitting bodies, each of the laminate(s) is configured to generate heat when an electric current is passed through the laminate.
